# EUROPEAN PATENT SPECIFICATION

(11) **EP 0 627 550 B1**
(45) Date of publication and mention of the grant of the patent: **21.03.2001**
(21) Application number: 94304037.8
(22) Date of filing: 06.06.1994
(51) Int. Cl.: F02B 37/12

(54) **Turbo-charger**
Turbolader
Turbocompresseur

(30) Priority: 04.06.1993 GB 9311584
(43) Date of publication of application: 07.12.1994
(73) Proprietor: HOLSET ENGINEERING COMPANY LIMITED, Turnbridge Huddersfield, HD1 6RD (GB)
(72) Inventor: Torley, John Joseph c/o Holset Engineering Company, West Yorkshire HD1 6RD (GB); McEwan, James Alexander c/o Holset Engineering, West Yorkshire HD1 6RD (GB)
(74) Representative: Allman, Peter John

(56) References cited:
- EP-A- 0 433 560
- WO-A-89/07194
- WO-A-93/19982
- GB-A- 2 059 515
- US-A- 3 994 620

## Description

The present invention relates to a turbo-charger, and in particular to a turbo-charger provided with a bypass passageway through which exhaust gas can be diverted away from a turbine wheel.

Turbo-chargers are known which comprise a turbine housing defining a turbine chamber, an exhaust gas inlet to the chamber, an exhaust gas outlet from the chamber, and a passageway which extends between the inlet and outlet and bypasses the chamber. A valve is mounted in the passageway and controlled to selectively open and close the bypass passageway. Such arrangements are provided to enable excess exhaust gas to be delivered to the turbo-charger outlet.

In the known turbo-chargers, such as that disclosed in US patent no. 4,075,849, the bypass passageway opens into a relatively large side pocket which communicates with the turbine outlet. Thus, when exhaust gas flows through the bypass into the pocket it discharges into the exhaust flow generally at right angles to the direction of gas delivered to the outlet from the turbine chamber. This disturbs the flow of gas through the outlet, thereby increasing back pressure and reducing turbine efficiency. Even when the bypass is blocked by the valve, the efficiency of the arrangement is reduced because the relatively large pocket opening into the turbine outlet disturbs the flow of gas.

In some known turbo-chargers exhaust gas discharged from the bypass passageway is deliberately introduced into the main exhaust gas flow from the turbine chamber in order to produce a "jet" effect to reduce pressure behind the turbine. An example of such a turbo-charger is disclosed in British patent number GB 2 059 515.

It is an object of the present invention to obviate or mitigate the problems outlined above.

According to the present invention, there is provided a turbo-charger comprising a turbine housing defining a turbine chamber, an exhaust gas inlet to the turbine chamber, an exhaust gas outlet from the turbine chamber, a passageway which extends between the inlet and outlet and bypasses the chamber, a valve mounted in the passageway, means for controlling the valve to selectively open and close the passageway, characterised in that:
(i) the passageway comprises an annular portion which communicates at its upstream end with a chamber defined around the valve and opens at its downstream end into the outlet in a direction such that gas issuing from the annular portion of the passageway is directed substantially parallel to the axis of the turbine in which direction gas flows from the turbine chamber through the outlet;
(ii) the annular portion of the passageway is located coaxially with and radially outside a first portion of the outlet and opens at a second portion of the outlet downstream of said first portion;
iii) the annular portion of the passageway reduces in radial width towards its downstream end; and
(iv) the first portion of the outlet tapers radially outwards towards the downstream end of the annular portion of the passageway and the second portion of the outlet;
whereby disruption in the flow of gas from the turbine chamber in outlet is minimised.

As gas is directed from the bypass passageway into the outlet in a direction parallel to that of other gas passing through that outlet, disturbance to the gas-flow through the outlet is minimised. When the passageway is closed by the valve, disturbance to the gas flow is also minimised.

Embodiments of the present invention will now be described, bv way of example, with reference to the accompanying drawings, in which;
Fig. 1 is a schematic sectional illustration of a first embodiment of the present invention;
Fig. 2 is an outlet end view of a second embodiment of the present invention;
Fig. 3 is a view on the line 3-3 in Fig.2;
Fig. 4 is a part sectional view of a third embodiment of the present invention;
Fig. 5 is an end view of the arrangement shown in Fig. 4;
Fig. 6 is an inlet end view of a casting from which a component of a fourth embodiment of the present invention is made;
Fig. 7 is an inlet end view of the casting of Fig. 6; and
Figs. 8 and 9 are cross-sections of the casting of Figs. 6 and 7 on the lines 8 and 9 respectively.

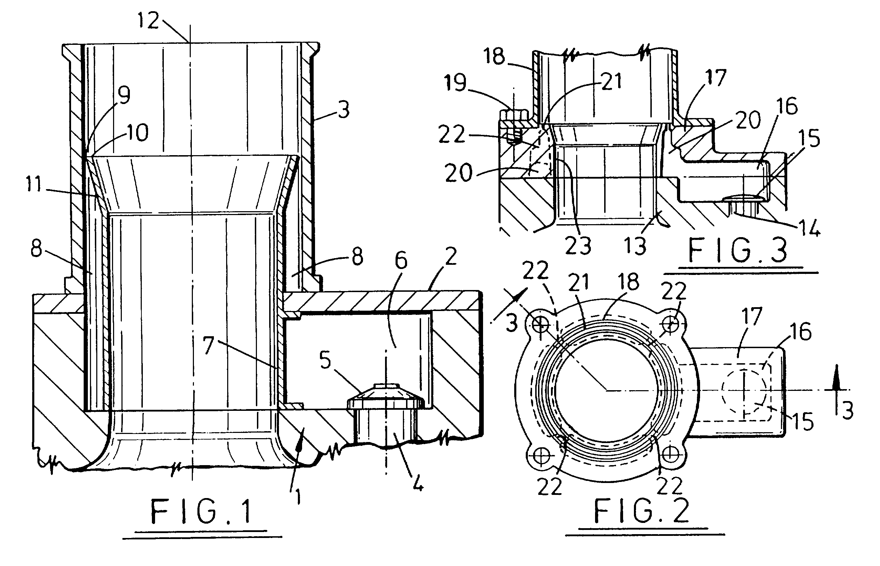

Referring to Fig. 1, the illustrated arrangement comprises a turbine housing including a casing 1 only the downstream portion of which is shown, a cover plate 2, and an exhaust outlet pipe 3.The casing 1 defines a turbine chamber in which a turbine wheel (not shown) is rotatably supported. Exhaust gas is fed from an exhaust inlet (not shown) through the turbine chamber and over the turbine wheel so as to cause it to rotate. The exhaust gas continues from the turbine chamber into the outlet pipe 3.

The casing 1 defines an upstream portion 4 of a bypass passageway, that portion being blocked by a poppet valve 5 located inside a chamber 6. An insert 7 is located within the exhaust outlet pipe 3 so as to define with that outlet pipe 3 an annular chamber 8 that communicates with the chamber 6 such that gas flowing into the chamber 6 is distributed to the annular chamber 8 and issues into the outlet pipe 3 through an annular gap 9 defined between a downstream edge 10 of the insert. An outwardly tapering portion 11 of the insert 7 provides a relatively smooth transition from the upstream portion of the insert 7 which is of relatively small diameter and the downstream edge 10 of the insert 7 which is of relatively larger diameter.

It will be appreciated that when the poppet valve 5 is shut, no gas can issue into the outlet pipe 3 through the gap 9. The tapering portion 11 of the insert 7 ensures however that relatively little turbulence is induced in the gas-flow passing the gap 9. When the valve 5 is open, gas passing through the insert 7 from the turbine chamber travels generally parallel to the axis 12 of the outlet and gas issuing into the outlet pipe 3 through the gap 9 also travels generally parallel to the axis 12. Thus there is little disturbance to the flow of gas and operating efficiency is therefore maximised.

Tests with the structure illustrated in Fig. 1 have shown that the cross-sectional flow area of the gap 9 is preferably between 1½ times and 2 times the cross-sectional area of the upstream portion 4 of the bypass passageway.

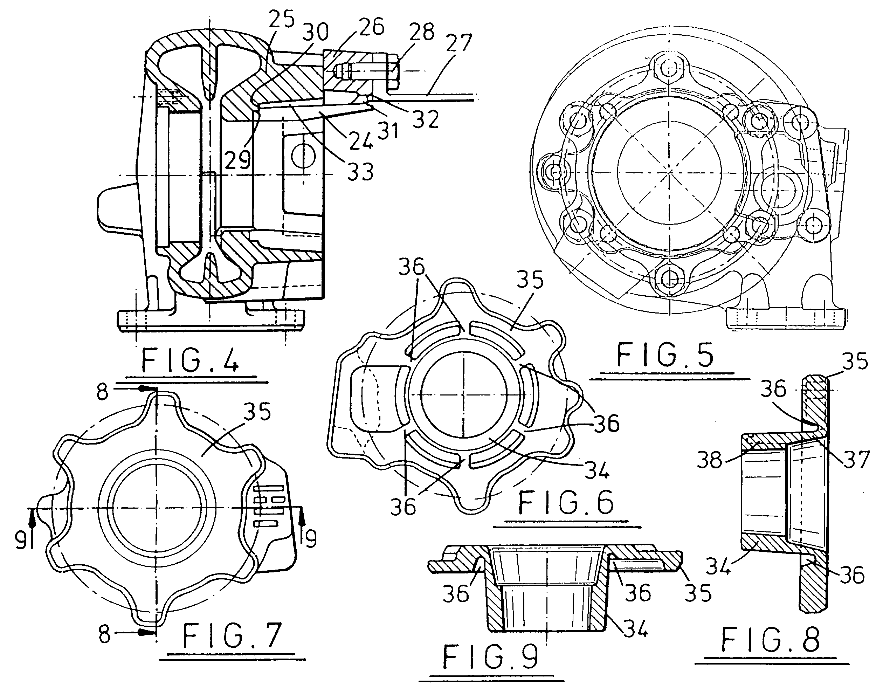

Referring now to the second embodiment of the invention illustrated in Figs. 2 and 3, a casing 13 houses a turbine wheel (not shown) and defines an upstream portion 14 of a bypass passageway. A poppet valve 15 closes the downstream end of the passageway portion 14. When the valve 15 is open gas within the passageway 14 enters a chamber 16 defined between the casing 13 and a cast cover plate 17. An exhaust outlet pipe 18 is secured to the cover plate 17 by bolts 19.

The cover plate is formed as a casting and defines an annular portion 20 of the bypass passageway, the annular portion 20 reducing in radial width towards an annular slot 21 through which gas issues into the exhaust outlet pipe 18. Radially extending struts 22 support a radially inner wall 23 of the cover plate 17, the radially inner wall 23 defining an upstream portion of the exhaust outlet. The surface 23 tapers outwards towards the downstream portion of the outlet into which the gas issues from the slot 21.

In order to manufacture the cover plate 17 shown in Figs. 2 and 3, the casing can be formed by casting without the provision of the slot 21. The annular slot 21 may then be formed by a lathe cut, metal being removed until the slot being cut breaks through and connects with the annular chamber 20.

Thus the structure of Figs. 2 and 3 is similar to that of Fig. 1 in terms of the way in which exhaust gases are directed through the main outlet from the turbine chamber and from the bypass passageway. Gas issuing from the slot 21 is directed generally parallel to the axis of the tubular outlet pipe 18 and thus does not significantly disrupt the flow of gas from the turbine.

Referring now to Figs. 4 and 5, these illustrate a third embodiment of the invention in which a tubular insert 24 is clamped between the housing casing 25 and a cast cover plate 26. An exhaust outlet pipe 27 is secured to the cover plate 26 by bolts 28. The insert 24 is formed at its inner end with an annular shoulder 29 which abuts against a corresponding annular shoulder 30 provided by the casing 25, and at its outer end with 6 equi-spaced radially extending webs 31 (only one of which is shown) which abut against a radial shoulder 32 formed in the cover plate 26. Gaskets (not shown) may be located between the insert 24 and the casing 25 and cover plate 26 to ensure the insert 24 is tightly held between the two.

An annular portion 33 of a bypass channel is defined between the insert 24 and both the casing 25 and cover plate 26, that portion of the channel 33 defined between the insert 24 and the cover plate 26 narrowing towards its downstream end. When the bypass channel 33 is open (through operation of a valve (not shown)) exhaust gas issues into the exhaust outlet pipe 27 through the annular portion 33 and between the webs 31.

Figs. 6 to 9 illustrate cast member which is used to fabricate a component of a fourth embodiment of the invention which is a modification of that shown in Figs. 4 and 5. The single cast member illustrated comprises a tubular portion 34 and an annular portion 35 and replaces the separate tubular insert 24 and cover plate 26 described above. The tubular portion 34 and annular portion 35 are joined together by 6 webs 36.

Subsequent to casting, the cast member is machined as shown partially by the dotted lines in Fig. 8 to give the finished component. In particular, a cut, indicated by reference 37, is made to open up an annular slot between the webs 36 to communicate the bypass channel (not shown) with the exhaust outlet (not shown). Also, the end of the tubular portion 34 is machined as shown by the dotted line 38 to provide an annular shoulder for location in the turbine housing casing (not shown).

The embodiments of Figs. 4 to 9 described above function in a similar manner to the previously described embodiments of the invention in the way that exhaust gases are directed through the main outlet from the turbine chamber and from the bypass passageway. In particular, downstream portions of both the tubular insert 24 and the tubular portion 34 taper radially outwards to provide a relatively smooth transition for exhaust gas exiting the turbine and entering the exhaust outlet. In both cases gas issuing from the respective bypass channels is directed generally parallel to the axis of the exhaust outlet to minimise disruption in the flow of gas from the turbine.

## Claims

1. A turbo-charger comprising a turbine housing defining a turbine chamber, an exhaust gas inlet to the turbine chamber, an exhaust gas outlet (3,7;23,18;24,27) from the turbine chamber, a passageway (4,6,8;14,16,20;33) which extends between the inlet and outlet (3,7;23,18;24,27) and bypasses the chamber, a valve (5;15) mounted in the passageway (4,6,8;14,16,20;33), means for controlling the valve (5;15) to selectively open and close the passageway (4,6,8;14,16,20;33)_{,} characterised in that:
(i) the passageway (4,6,8;14,16,20;33) comprises an annular portion (8;20;33) which communicates at its upstream end with a chamber (6;16) defined around the valve (5;15) and opens at its downstream end into the outlet (3,7;23,18;24,27) in a direction such that gas issuing from the annular portion (8;20;33) of the passageway (4,6,8;14,16,20;33) is directed substantially parallel to the axis of the turbine in which direction gas flows from the turbine chamber through the outlet (3,7;23,18;24,27);
(ii) the annular portion (8;20;33) of the passageway is located coaxially with and
radially outside a first portion (7;23) of the outlet (3,7;23,18;24,27) and opens at a second portion (3;18) of the outlet (3,7;23,18;24,27) downstream of said first portion (7;23);
(iii) the annular portion (8;20;33) of the passageway (4,6,8;14,16,20;33) reduces in radial width towards its downstream end; and
(iv) the first portion (7;23) of the outlet tapers radially outwards towards the downstream end of the annular portion (8;20;33) of the passageway (4,6,8;14,16,20;33) and the second portion (3;18) of the outlet (3,7;23,18;24,27);
whereby disruption in the flow of gas from the turbine chamber in outlet (3,7;23,18;24,27) is minimised.

2. A turbo-charger according to claim 1, wherein the first portion (7) of the outlet (3,7) comprises a tubular insert (7) which is located within an exhaust outlet pipe (3), said annular portion (8) of the bypass passageway (4,6,8) being defined between the tubular insert (7) and the outlet pipe (3), the tubular insert (7) having a downstream portion ( I I ) which diverges radially outward to define said taper.

3. A turbo-charger according to Claim 1, wherein the annular portion (20) of the by-pass passage (14,16,18) way is defined by a cover plate (17) secured to the turbine housing, the cover plate being provided with radially inwardly extending struts (22) supporting a radially inner wall (23) of the cover plate (17), the wall (23) defining an upstream portion of the exhaust outlet.

## Patentansprüche

1. Turbolader, der folgendes aufweist: ein Turbinengehäuse, das eine Turbinenkammer definiert, einen Abgaseinlaß in die Turbinenkammer, einen Abgasauslaß (3, 7; 23, 18; 24, 27) aus der Turbinenkammer, einen Durchgang (4, 6, 8; 14, 16, 20; 33), der sich zwischen dem Einlaß und dem Auslaß (3, 7; 23, 18; 24, 27) erstreckt und die Kammer umgeht, ein Ventil (5; 15), das im Durchgang (4, 6, 8; 14, 16, 20; 33) angebracht ist, Mittel zur Steuerung des Ventils (5; 15) zum selektiven Öffnen und Schließen des Durchgangs (4, 6, 8; 14, 16, 20; 33), dadurch gekennzeichnet, daß:
(i) der Durchgang (4, 6, 8; 14, 16, 20; 33) einen ringförmigen Abschnitt (8; 20; 33) aufweist, der an seinem oberhalb befindlichen Ende mit einer Kammer (6; 16) in Verbindung steht, die um das Ventil (5; 15) definiert wird, und sich an seinem unterhalb befindlichen Ende in einer solchen Richtung in den Auslaß (3, 7; 23, 18; 24, 27) öffnet, daß Gas, das aus dem ringförmigen Abschnitt (8; 20; 33) des Durchgangs (4, 6, 8; 14, 16, 20; 33) austritt, im wesentlichen parallel zur Achse der Turbine geleitet wird, in der Richtung, in der das Gas aus der Turbinenkammer durch den Auslaß (3, 7; 23, 18; 24, 27) strömt,
(ii) der ringförmige Abschnitt (8; 20; 33) des Durchgangs koaxial mit und in Radialrichtung außerhalb eines ersten Abschnitts (7; 23) des Auslasses (3, 7; 23, 18; 24, 27) angeordnet ist und sich an einem zweiten Abschnitt (3; 18) des Auslasses (3, 7; 23, 18; 24, 27) unterhalb des ersten Abschnitts (7; 23) öffnet,
(iii) der ringförmige Abschnitt (8; 20; 33) des Durchgangs (4, 6, 8; 14, 16, 20; 33) in der Radialbreite hin zu seinem unterhalb befindlichen Ende kleiner wird, und
(iv) der erste Abschnitt (7; 23) des Auslasses sich in Radialrichtung nach außen hin zum unterhalb befindlichen Ende des ringförmigen Abschnitts (8; 20; 33) des Durchgangs (4, 6, 8; 14, 16, 20; 33) und des zweiten Abschnitts (3; 18) des Auslasses (3, 7; 23, 18; 24, 27) verjüngt,
wodurch die Unterbrechung im Gasstrom aus der Turbinenkammer im Auslaß (3, 7; 23, 18; 24, 27) auf ein Minimum gesenkt wird.

2. Turbolader nach Anspruch 1, bei dem der erste Abschnitt (7) des Auslasses (3, 7) einen ringförmigen Einsatz (7) aufweist, der sich innerhalb eines Abgasauslaßrohres (3) befindet, wobei der ringförmige Abschnitt (8) des Umgehungsdurchgangs (4, 6, 8) zwischen dem rohrförmigen Einsatz (7) und dem Auslaßrohr (3) definiert wird, wobei der rohrförmige Einsatz (7) einen unterhalb befindlichen Abschnitt (11) hat, der in Radialrichtung nach außen divergiert, um die Verjüngung zu definieren.

3. Turbolader nach Anspruch 1, bei dem der ringförmige Abschnitt (20) des Umgehungsdurchgangs (14, 16, 18) durch eine Deckplatte (17) definiert wird, die am Turbinengehäuse befestigt ist, wobei die Deckplatte mit in Radialrichtung nach innen verlaufenden Streben (22) versehen ist, die eine in Radialrichtung innere Wand (23) der Deckplatte (17) tragen, wobei die Wand (23) einen oberhalb befindlichen Abschnitt des Abgasauslasses definiert.

## Revendications

1. Turbocompresseur comprenant un boîtier de turbine définissant une chambre de turbine, un orifice d'entrée des gaz d'échappement dans la chambre de la turbine, un orifice de sortie des gaz d'échappement (3, 7; 23, 18; 24, 27) de la chambre de la turbine, un passage (4, 6, 8; 14, 16, 20; 33) s'étendant entre l'orifice d'entrée et l'orifice de sortie (3, 7; 23, 18; 24, 27) et contournant la chambre, une soupape (5; 15) montée dans le passage (4, 6, 8; 14, 16, 20; 33), un moyen pour commander la soupape (5; 15) pour ouvrir et fermer sélectivement le passage (4, 6, 8; 14, 16, 20; 33), caractérisé en ce que:
(i) le passage (4, 6, 8; 14, 16, 20; 33) comprend une partie annulaire (8; 20; 33) communicant au niveau de son extrémité amont avec une chambre (6; 16) définie autour de la soupape (5; 15) et s'ouvrant au niveau de son extrémité aval dans l'orifice de sortie (3, 7; 23, 18; 24, 27), dans une direction telle que le gaz sortant de la partie annulaire (8; 20; 33) du passage (4, 6, 8; 14, 16, 20; 33) est dirigé de façon pratiquement parallèle à l'axe de la turbine dans laquelle le gaz s'écoule de la chambre de la turbine à travers l'orifice de sortie (3, 7; 23, 18; 24, 27);
(ii) la partie annulaire (8; 20; 33) du passage est agencée coaxialement à une première partie (7 ; 23) de l'orifice de sortie (3, 7; 23, 18; 24, 27) et radialement à l'extérieur de celle-ci et s'ouvre au niveau d'une deuxième partie (3; 18) de l'orifice de sortie (3, 7; 23, 18; 24, 27), en aval de ladite première partie (7; 23);
(iii) la partie annulaire (8; 20; 33) du passage (4, 6, 8; 14, 16, 20; 33) a une largeur radiale réduite en direction de son extrémité aval; et
(iv) la première partie (7; 23) de l'orifice de sortie est effilée radialement vers l'extérieur en direction de l'extrémité aval de la partie annulaire (8; 20; 33) du passage (4, 6, 8; 14, 16, 20; 33) et de la deuxième partie (3; 18) de l'orifice de sortie (3, 7; 23, 18; 24, 27);
la perturbation de l'écoulement du gaz à partir de la chambre de la turbine dans l'orifice de sortie (3, 7; 23, 18; 24, 27) étant ainsi réduite au minimum.

2. Turbocompresseur selon la revendication 1, dans lequel la première partie (7) de l'orifice de sortie (3, 7) comprend un insert annulaire (7) agencé dans un tuyau de l'orifice de sortie d'échappement (3), ladite partie annulaire (8) du passage de dérivation (4, 6, 8) étant définie entre l'insert tubulaire (7) et le tuyau de l'orifice de sortie (3), l'insert tubulaire (7) comportant une partie aval (11) déviée radialement vers l'extérieur pour définir ledit effilement.

3. Turbocompresseur selon la revendication 1, dans lequel la partie annulaire (20) du passage de dérivation (14, 16, 18) est définie par une plaque de couverture (17) fixée au boîtier de la turbine, la plaque de couverture comportant des entretoises s'étendant radialement vers l'intérieur (22), supportant une paroi radialement interne (23) de la plaque de couverture (17), la paroi (23) définissant une partie amont de l'orifice de sortie d'échappement.
